# EUROPÄISCHE PATENTANMELDUNG

(11) **EP 4 427 885 A1**
(43) Veröffentlichungstag der Anmeldung: **11.09.2024**
(21) Anmeldenummer: 23160365.5
(22) Anmeldetag: 07.03.2023
(51) Int. Cl.: B25D 17/06, B23P 11/00, B23P 15/10, B21K 25/00, B25D 11/12

(54) **VERFAHREN ZUR HERSTELLUNG EINES HYBRIDEN SCHLAGWERKSKÖRPERS FÜR EIN ELEKTROHANDWERKZEUG**

(71) Anmelder: Hilti Aktiengesellschaft, 9494 Schaan (LI)
(72) Erfinder: Gebauer, Christian, 9450 Altstätten (CH); Schallert, Manfred, 6710 Nenzing (AT)
(74) Vertreter: Hilti Aktiengesellschaft Corporate Intellectual Property

(57) **Zusammenfassung**

Die Erfindung betrifft ein Verfahren zur Herstellung eines hybriden Schlagwerkskörpers (1) für ein Schlagwerk eines Elektrohandwerkzeugs, welcher aus zumindest einem Kernelement (2) sowie einem diesen zumindest teilweise umgebenden Mantelelement (3) zusammengesetzt wird, umfassen die folgenden Fertigungsschritte: Bereitstellen eines in einen Mantelelement-Rohling (3') eingelegten Kernelement-Rohlings (2'), wobei zumindest eines der beiden Bauteile aus einem Stahlmaterial besteht; Massivumformen des Mantelelement-Rohlings (3') mit dem Kernelement-Rohling (2') mittels eines zumindest einstufigen Verbundfließpressens, derart, dass das Kernelement (2) formschlüssig unverlierbar mit dem umgebenen Mantelelement (3) verbunden wird.

## Beschreibung

Die vorliegende Erfindung betrifft ein Verfahren zur Herstellung eines hybriden Schlagwerkskörpers für ein Schlagwerk eines Elektrohandwerkzeugs, welcher aus zumindest einem Kernelement sowie einem diesen zumindest teilweise umgebenden Mantelelement zusammengesetzt wird. Außerdem betrifft die Erfindung auch mehrere Ausführungsformen von hybriden Schlagwerkskörpern, die mit einem solchen Verfahren herstellbar sind, sowie ein pneumatisches Schlagwerk für ein Elektrohandwerkzeug, umfassend einen erfindungsgegenständlichen hybriden Schlagwerkskörper und ein Elektrohandwerkzeug selbst.

Das Einsatzgebiet der Erfindung erstreckt sich vornehmlich auf Bohrhämmer und Schlaghämmer. Die Elektrohandwerkzeuge der hier interessierenden Art sind in der Lage, mit geeigneter Wiederholrate einen Impulsstoß auf ein Werkzeug, wie insbesondere einem Schlagbohrer oder Meißel, zu übertragen. Dazu wird das Schlagwerk mit einem elektromotorischen Antrieb betrieben, der beschleunigend auf einen beweglichen Schlagwerkkörper, wie beispielsweise einen Schläger oder Schlagbolzen, eines an sich bekannten Schlagwerks einwirkt. Der Antrieb des Schlagwerks kann beispielsweise mit einem auf einem Antriebsrad gelagerten Exzenterrad gebildet sein, das einen Kolben nach Art eines Kurbeltriebs zu einer Hubbewegung veranlasst, welcher dann, beispielsweise pneumatisch, den Schläger zu einer hin- und her-Bewegung antreibt und dies wiederum den Schlagbolzen anregt. Ein Impulsstoß wird also vom unmittelbar angetriebenen Schläger des Schlagwerks zunächst auf den Schlagbolzen und dann vom Schlagbolzen auf den Werkzeugschaft des Werkzeugs übertragen.

Der Schlagwerkskörper weist gewöhnlich eine Seitenfläche und eine Anschlagfläche auf. Regelmäßig wird der Impulsstoß des Schlagwerkskörpers an der Anschlagseite auf ein impulsaufnehmendes Bauteil übertragen. Das impulsaufnehmende Bauteil ist dabei das Werkzeug des Elektrohandwerkzeugs, das den Impulsstoß an einer Stirnfläche des Werkzeugs aufnimmt. Impulsübertragende Anschlagflächen dienen vor allem zur Impulsübertragung zwischen Schlagwerkskörpern innerhalb des Schlagwerks, also beispielsweise einem Schläger und einem Schlagbolzen. Schlagwerksteile des Schlagwerks haben, insbesondere an einer Anschlagfläche und/oder Seitenfläche, vergleichsweise hohen Belastungen standzuhalten.

### Stand der Technik

Gemäß dem allgemein bekannten Stand der Technik besteht ein Schlagwerkskörper gewöhnlich aus einem Einsatz- oder Vergütungsstahl, der beispielsweise als Ganzes mittels Einsatzhärten, Vergüten oder dergleichen wärmebehandelt ist und als solcher einstückig über den gesamten Schlagwerkskörper reichende identische Materialeigenschaften aufweist, insbesondere auch an der Anschlagfläche und Seitenfläche. Es hat sich jedoch gezeigt, dass ein Schlagwerkskörper in unterschiedlichen Bereichen unterschiedlichen Beanspruchungen ausgesetzt ist, die unterschiedliche Anforderungen an das Material stellen.

Die Anforderungen sind mit zunehmender Energiedichte in einem Schlagwerk umso gravierender, also mit zunehmendem Verhältnis von Energieeintrag zu Bauteilgröße eines Schlagwerkskörpers, und können bei undefinierten Energiesteuerungen ein so genanntes Nachschlagen des einstückigen Schlagwerkskörpers bewirken.

Maßgeblich ist der durch den aus Geschwindigkeit und bewegter Masse sich ergebende zu übertragende Impuls eines Schlagwerkskörpers in Relation zur Widerstandsfähigkeit des Materials des Schlagwerkskörpers, insbesondere an dessen Anschlagfläche und/oder Seitenfläche.

Zudem bedeuten größere Schlagmassen eines Schlagwerkskörpers immer auch einen größeren Bauraum des Schlagwerks hinsichtlich Durchmesser und Länge innerhalb des Elektrohandwerkzeugs, was zu größeren und gegebenenfalls überproportional schweren Maschinen führt.

Die JP 10169385 A offenbart eine technische Lösung, bei der die Energiedichte in einem Schlagwerk durch Erhöhung der spezifischen Dichte eines Schlagwerkskörpers erhöht wird. Selbst bei Einsatz von sehr hochwertigen Materialien und konventionellen Wärmebehandlungsverfahren für einen Schlagwerkskörper lassen sich bei erhöhten Energiedichten übermäßige Beanspruchungen und frühzeitigere Materialermündungen letztlich nicht mehr vermeiden und eine wirtschaftliche Fertigung ist hierbei nicht mehr erreichbar.

Aus der JP 2006 123025 A sind technische Maßnahmen bekannt, eine Schlagwerkskörpermasse mittels unterschiedlicher Materialdichten einzustellen. Jedoch sind diese Maßnahmen nicht ausreichend, da zum einen nur eine unzureichende Verbindung unterschiedlicher Schlagwerksteilmassen erreicht werden kann. Zum anderen erweisen sich in jedem Fall die am meisten beanspruchten Bereiche eines Schlagwerkskörpers, nämlich Anschlagflächen und Seitenflächen, als nicht ausreichend widerstandsfähig.

Aus beispielsweise der JP 8197458 A und der DE 103 044 07 A1 sind unterschiedliche hybride Schlagwerkskörper mit Hohlräumen als Mantelelemente bekannt, die mit plastischen Materialien oder Einzelteilchen als Kernelemente befüllt, dämpfend auf die Bewegung des Schlagwerkskörpers wirken. Dabei soll dem Nachschlagen entgegengewirkt werden. Die serielle Fertigung erweist sich jedoch technologisch als recht aufwändig.

Durch im Stand der Technik bekannte Maßnahmen ist es also bislang nicht möglich, negative Effekte wie das Nachschlagen oder die Generierung von zu hohen Zugspannungen in einem Einsatzwerkzeug sowie unzureichende Schlagenergie bei kleinen Handwerksgeräten zu eliminieren.

Es ist die Aufgabe der vorliegenden Erfindung einen Schlagwerkskörper für ein Schlagwerk einer Elektrohandwerkzeugmaschine dahingehend weiter zu verbessern, dass dieser in einfacher Weise herstellbar wirksam ein Nachschlagen vermeidet und dafür hinreichend stabil, kompaktbauend und schwer ausgebildet ist.

### Offenbarung der Erfindung

Die Aufgabe wird hinsichtlich eines Herstellungsverfahrens durch Anspruch 1 gelöst. Verschiedene Ausführungsformen eines hierdurch hergestellten Schlagwerkskörpers sind in den Ansprüchen 6 bis 10 angegeben. Während Anspruch 11 auf ein pneumatisches Schlagwerk mit einem erfindungsgemäßen Schlagwerkskörper abzielt, ist der Anspruch 12 auf ein Elektrohandwerkzeug mit einem solchen pneumatischen Schlagwerk gerichtet. Die verbleibenden abhängigen Ansprüche geben vorteilhafte Weiterbildungen der Erfindung wieder.

Die Erfindung schließt die verfahrenstechnische Lehre ein, dass zur Herstellung eines hybriden Schlagwerkskörpers für ein Schlagwerk eines Elektrohandwerkzeugs, welcher aus zumindest einem Kernelement sowie einem diesen zumindest teilweise umgebenden Mantelelement zusammengesetzt wird, die folgenden Fertigungsschritte ausgeführt werden:
- Bereitstellen eines in einem Mantelelement-Rohling eingelegten Kernelement-Rohlings, wobei zumindest eines der beiden Bauteile aus einem Stahlmaterial besteht.
- Massivumformen des Mantelelement-Rohlings gemeinsam mit dem Kernelement-Rohling mittels eines zumindest einstufigen Verbundfließpressens, derart, dass das Kernelement formschlüssig und unverlierbar mit dem umgebenden Mantelelement verbunden wird.

Die erfindungsgemäße Lösung macht also sich die Technologie der Massivumformung zunutze, um den erfindungsgemäßen hybriden Schlagwerkskörper herzustellen. Normalerweise wird das Massivumformen im Zuge des so genannten massiven Leichtbaus in der Automobilindustrie angewendet, um Bauteile entweder konstruktiv oder durch die Verbindung mehrerer Werkstoffe sowie deren anschließendem gemeinsamen Umformen in der Gewichtsmasse zu reduzieren. Ein Beispiel ist dabei die Gewichtsreduzierung einer Getriebewelle durch ein Verbundfließpressen als Unterkategorie des Massivumformens. Die Welle besteht dabei meist aus einem Leichtmetallkern, der von einem Edelstahl-Mantel umgeben ist. Bei der vorliegenden Erfindung wird jedoch dieser Grundsatz des massiven Leichtbaus umgedreht und es wird die Gewichtsmasse eines Schlagwerkskörpers erhöht sowie weitere statische und dynamische Anforderungen optimiert.

Der Vorteil der erfindungsgemäß umformtechnischen Lösung besteht insbesondere darin, dass eine Wärmebehandlung und mechanische Fertigbearbeitung des Bauteils vollkommen entfallen können. Der erfindungsgemäß hergestellte hybride Schlagwerkskörper weist eine höhere Schlagenergie als konventionelle Schlagwerkskörper auf, so dass ein hiermit ausgestattetes Schlagwerk bei gleichem Bauraum mehr Schlagleistung erbringen kann oder ein Schlagwerk bei kleinerem Bauraum die gleiche Schlagleistung erbringen kann. Der erfindungsgemäß hergestellte hybride Schlagwerkskörper verursacht einen geringeren Nachschlageffekt als konventionelle einstückige Schlagwerkskörper.

Die formschlüssig unverlierbare Verbindung zwischen Kernelement und Mantelkörper des hybriden Schlagwerkskörpers wird vorzugsweise dadurch hergestellt, dass am Kernelement innerhalb einer axialen Fügezone eine Hinterschnittkontur erzeugt wird, welche zumindest teilweise von Material des Mantelelements ausgefüllt wird. Als Hinterschnittkontur eignet sich beispielsweise eine Einschnürung oder mindestens ein Absatz an einem vorzugsweise rotationssymmetrischen Kernelement.

Zusätzlich oder alternativ kann am Kernelement und/oder dem hiermit korrespondierend am Mantelelement im Bereich der axialen Fügezone eine lokal erhöhte Oberflächenrauigkeit erzeugt werden, welche höher ist als die Oberflächenrauigkeit an übrigen Oberflächenbereichen der zu fügenden Bauteile. Eine solche Oberflächenrauigkeit kann mittels mechanischer oder chemischer Verfahren, beispielsweise durch chemisches Ätzen, mechanisches Rändeln und dergleichen erzeugt werden.

Gemäß einer bevorzugten Ausführungsform sind sowohl das Kernelement als auch das Mantelelement aus einem Stahlmaterial hergestellt, wobei das Kernelement vorzugsweise aus einem Hartmetallmaterial besteht, um hiermit dem Schlagwerkskörper eine hohe Material- und damit Energiedichte zu verleihen. Demgegenüber besteht das Mantelelement vorzugsweise aus einem herkömmlichen Kohlenstoffstahl, der eine höhere Zähigkeit als ein Hartmetall aufweist, um geeignete Seiten- und Anschlagflächen des Schlagwerkskörpers zu gewährleisten.

Im Ausgangszustand kann der Mantelelement-Rohling umformtechnisch topf- oder zylinderförmig vorgeformt sein. Der hierdurch gebildete Innenraum ist vorzugsweise zylindrisch, um das korrespondierend vorzugsweise ebenfalls zylindrische Kernelement hierin zumindest teilweise vor dem Massivumformen aufzunehmen. Alternativ hierzu kann es auch vorgesehen sein, dass der Mantelelement-Rohling sowohl innenseitig nicht zylindrisch bzw. nicht achsensymmetrisch vorgeformt ist. Es kann beispielsweise vorgesehen sein, dass eine polygone Form oder dergleichen vorgesehen ist bzw. Ein Querschnitt vieleckig, beispielsweise rechteckig oder mehrere Rundungen mit beispielsweise verschiedenen Radien aufweist.

Gemäß einer ersten bevorzugten Ausführungsform wird durch das Massivumformen ein hybrider Schlagwerkskörper hergestellt, dessen Mantelelement zylindrisch hülsenförmig ausgebildet ist, wobei dessen axiale Länge kleiner ist als die axiale Länge des hiervon umschlossenen Kernelements, so dass vom Kernelement beidseitige Stirnflächen gebildet sind. Hierdurch wird ein durchgehendes Kernelement geschaffen und beide metallischen Bauteile werden durch das umformtechnische Fügen per Verbundfließpressen formschlüssig verbunden. Die Werkstoffe von Kernelement und Mantelelement sind dabei so gewählt, dass das Kernelement eine maximal hohe Materialdichte aufweist. Dadurch soll beim späteren Einsatz im Schlagwerk eine maximale Schlagenergie durch ein entsprechend erhöhtes Bauteilgewicht erzeugt werden. Das Kernelement besitzt die vorstehend erwähnte Hinterschnittkontur, welche durch das umformtechnische Fügen mit dem Werkstoff des plastisch umgeformten Mantelelements gefüllt wird. Damit kann im Moment der Schlagwirkung das Mantelelement nicht axial bezüglich des Kernelements verschoben werden. Die Fügezone besitzt hinsichtlich einer Funktionsintegration also auch die Funktion einer Kraftübertragung in Axialrichtung und/oder Radialrichtung.

Das Mantelelement besteht demgegenüber aus einem Metall, welches günstige umformtechnische Eigenschaften besitzt. Hierbei wird sichergestellt, dass die Manteloberfläche, die u. a. auch als Dichtungsfläche im pneumatischen Schlagwerk fungiert, durch den Umformprozess als so genanntes net-shape, also als einbaufertige Oberfläche, hergestellt werden kann. Hierdurch entfallen aufwandstreibende Nachbearbeitungsprozesse, wie ein Schleifen der Oberfläche. Das Mantelelement kann beispielsweise aus dem Kohlenstoffstahl 16MnCr5 bestehen. Dieses Stahlmaterial kann ferner nach einer Umformung gehärtet werden, falls erforderlich. Ein Vorhalten des Härteverzugs von erwähnten Funktionsflächen muss dabei allerdings berücksichtigt werden. Das Mantelelement, welches bei dieser Ausführungsform geometrisch eine zylindrische Hülsenform beschreibt, kann per Umformen vorgefertigt werden. Durch das stirnseitige Hervorstehen des Kernelements vor dem Mantelelement, ist Letzteres nicht Bestandteil der Aufschlagsflächen des Schlagwerkskörpers.

Gemäß einer zweiten bevorzugten Ausführungsform eines erfindungsgemäß ausgebildeten hybriden Schlagwerkskörpers ist dessen Mantelelement zylindrisch topfförmig ausgebildet, wobei das hiervon umschlossene Kernelement hieraus hervorstehend die erste Stirnseite bildet und die Bodenfläche des Mantelelements die zweite Stirnseite bildet, welche beide durch das umformtechnische Fügen miteinander fest verbunden werden. Im Unterschied zur vorstehend beschriebenen Ausführungsform besteht hier zumindest eine der Stirnflächen aus dem Werkstoff des topfförmigen Mantelelements. Vorzugsweise besteht die eine Stirnfläche des Schlagwerkskörpers also aus dem Mantelelement-Material und die andere Stirnfläche des Schlagwerkskörpers besteht aus dem Kernelement-Material.

Alternativ hierzu ist es gemäß einer dritten bevorzugten Ausführungsform auch denkbar, beide Stirnflächen des Schlagwerkskörpers durch das Mantelelement-Material auszubilden. Hierfür umschließt das Mantelelement das Kernelement allseitig oder zumindest größtenteils allseitig.

Gemäß einer vierten bevorzugten Ausführungsform eines erfindungsgemäß hergestellten hybriden Schlagwerkskörpers ist das Mantelelement zylindrisch topfförmig ausgebildet, wobei das Kernelement hiervon derart umschlossen ist, dass dieses eine Kolben-Zylinder-Anordnung bildend axial bewegbar relativ zum Mantelelement ausgeführt ist. Dabei fungiert ein hervorstehender Teil des Kernelements als erste Stirnseite des Schlagwerkskörpers, wohingegen die Bodenfläche des Mantelelements die zweite Stirnseite des Schlagwerkskörpers bildet. Im Unterschied zu den vorstehend erläuterten bevorzugten Ausführungsformen eines hybriden Schlagwerkskörpers sind die beiden Bauteile bei der vierten Ausführungsform relativ zueinander in Axialrichtung verschiebbar. Diese Funktion erfüllt den Zweck, bei einem Auftreffschlag das Nachschlagverhalten des Schlagwerkskörpers weiter zu minimieren.

Gemäß einer bevorzugten Ausführungsform eines erfindungsgemäß hergestellten hybriden Schlagwerkskörpers ist eine Verdrehsicherung vorgesehen, welche eine Verdrehmöglichkeit des Kernelements gegenüber dem Mantelelement zumindest einschränkt und insbesondere vollständig unterbindet. Die Verdrehsicherung kann insbesondere durch eine entsprechende Formgebung des Kernelements gegenüber dem Mantelelement erzielt sein, wobei das Kernelement hierzu insbesondere nicht rotationssymmetrisch ausgeführt ist.

Ein hybrider Schlagwerkskörper der vorstehend beschriebenen Ausführungsformen kommt vorzugsweise im Rahmen eines pneumatischen Schlagwerks für ein Elektrohandwerkzeug zur Anwendung, welches außerdem einen Schlagwerkszylinder, einen so genannten Döpper zur axialen Stoßbeaufschlagung eines Werkzeugs sowie einen Schlagwerkskolben aufweist, der als Schlagwerkskörper nach einem der vorstehenden Ansprüche ausgebildet ist. Der Schlagwerkskolben ist dabei Bestandteil eines an sich bekannten antriebsseitigen Kurbeltriebs.

### Detailbeschreibung der Zeichnung

Weitere die Erfindung verbessernde Maßnahmen werden nachstehend gemeinsam mit der Beschreibung bevorzugter Ausführungsbeispiele der Erfindung anhand der Figuren näher dargestellt. Es zeigt:
- Fig. 1: einen schematischen Ablaufplan des erfindungsgemäßen Verfahrens zur Herstellung eines hybriden Schlagwerkskörpers,
- Fig. 2: eine schematische Darstellung eines Schlagwerks eines Elektrohandwerkzeugs mit einem erfindungsgemäß ausgebildeten hybriden Schlagwerkskörper,
- Fig. 3: eine erste Ausführungsform eines hybriden Schlagwerkskörpers,
- Fig. 4: eine zweite Ausführungsform eines hybriden Schlagwerkskörpers,
- Fig. 5: eine dritte Ausführungsform eines hybriden Schlagwerkskörpers, und
- Fig. 6: eine vierte Ausführungsform eines hybriden Schlagwerkskörpers.

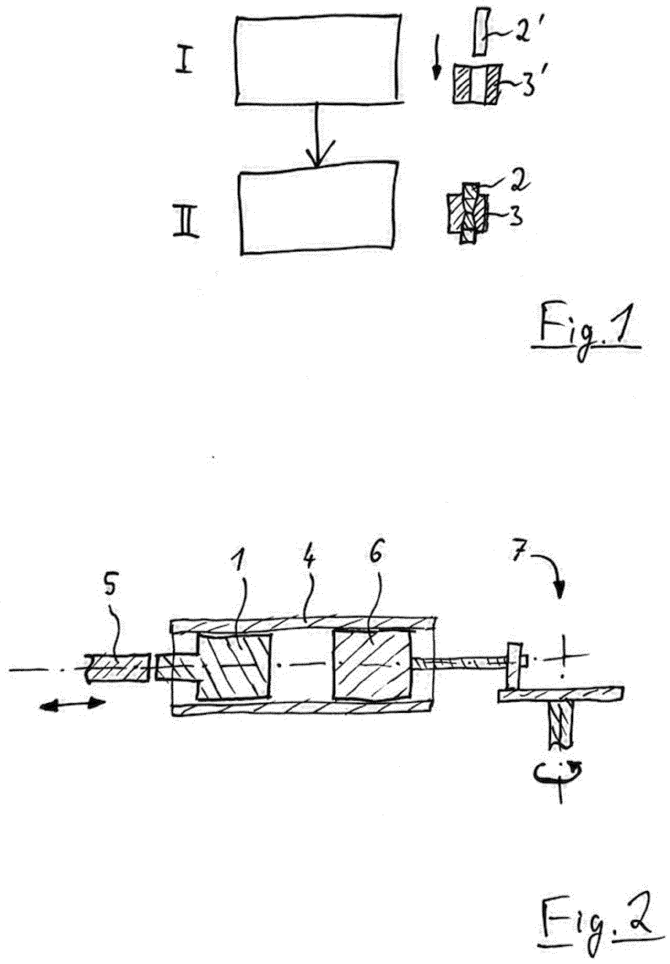

Gemäß Fig. 1 geht ein Herstellungsverfahren für einen erfindungsgemäßen hybriden Schlagwerkskörper aus von dem Bereitstellen (I) eines in einem hier hülsenförmigen Mantelelement-Rohling 3' eingelegten Kernelelement-Rohlings 2`, die beide aus einem Stahlmaterial unterschiedlicher Härte bestehen. Während der zylindrische Kernelement-Rohling 2' aus einem Hartmetall besteht, ist der Mantelelement-Rohling 3' aus einem fließpressfähigen Kohlenstoffstahl vorgeformt.

Anschließend erfolgt ein Massivumformen (II) des Mantelelement-Rohlings 3' mit dem Kernelement-Rohling 2' mittels Verbundfließpressen in einem geeigneten Umformwerkzeug, das sicherstellt, dass das hieraus entstehende Kernelement 2 formschlüssig unverlierbar mit dem umgebenden Mantelelement 3 verbunden wird.

Gemäß Fig. 2 ist ein derartig hergestellter hybrider Schlagwerkskörper 1 für das hier dargestellte pneumatische Schlagwerk eines Elektrohandwerkzeugs vorgesehen, welches verschiebbar und dynamisch dichtend in einen Schlagwerkszylinder 4 angeordnet ist. Der Schlagwerkskörper 1 dient einer axialen Stoßbeaufschlagung eines Werkzeugs 5, der hier ein Schlagmeißel darstellen soll.

Gegenüberliegend ist ein ebenfalls dynamisch dichtend axial bewegbar im Schlagwerkszylinder 4 angeordneter Erregerkolben 6 über einen Kurbeltrieb 7 axial hin- und her-bewegbar. Somit wird vom Kurbeltrieb 7 eine rotierende Antriebsbewegung in einer alternierenden hin- und her-Bewegung des Erregerkolbens 6 umgesetzt, der per pneumatischer Übertragungsstrecke die Bewegung an den Schlagwerkskörper 1 zur gedämpften Stoßbeaufschlagung des Werkzeugs 5 weitergibt.

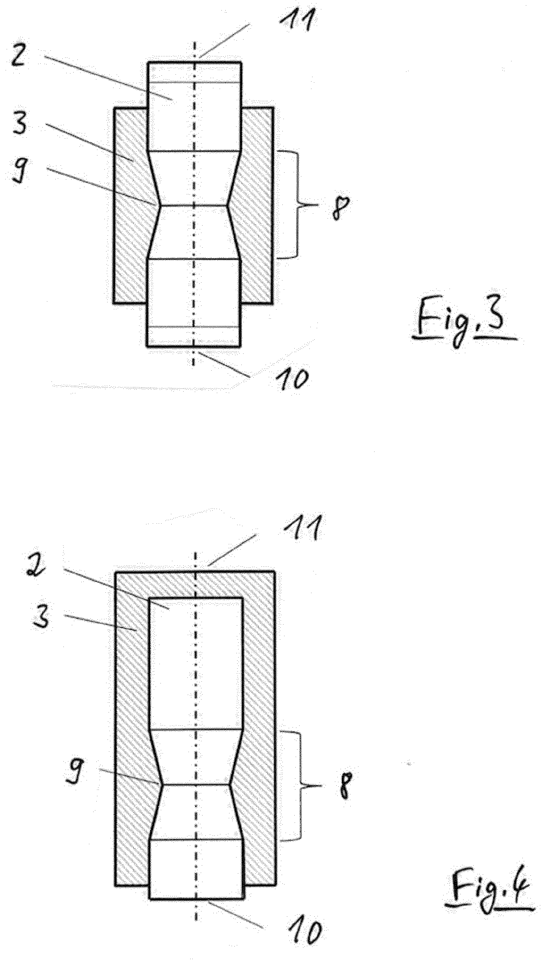

Nach Fig. 3 wird gemäß der ersten Ausführungsform die formschlüssig unverlierbare Verbindung zwischen dem Kernelement 2 und dem Mantelelement 3 dadurch hergestellt, dass am Kernelement 2 innerhalb einer axialen Fügezone 8 eine Hinterschnittkontur 9 nach Art einer Einschnürung des ansonsten zylindrischen Kernelements 2 erzeugt wird, welche vom Material des Mantelelements 3 nach dem Massivumformen ausgefüllt ist. Das Mantelelement 3 ist zylindrisch hülsenförmig ausgebildet und besitzt eine kleinere axiale Länge als das hiervon umschlossene Kernelement 2. Somit werden die beidseitigen Stirnflächen 10 und 11 vom Kernelement 2 gebildet.

Gemäß Fig. 4 unterscheidet sich die zweite Ausführungsform eines hybriden Schlagwerkskörper von der vorstehend beschriebenen Ausführungsform dahingehend, dass das Mantelelement 3 zylindrisch topfförmig ausgebildet ist. Das hiervon umschlossene Kernelement 2 steht die erste Stirnfläche 10 bildend hieraus hervor. Dagegen bildet die Bodenfläche des Mantelelements 3 die zweite Stirnfläche 11.

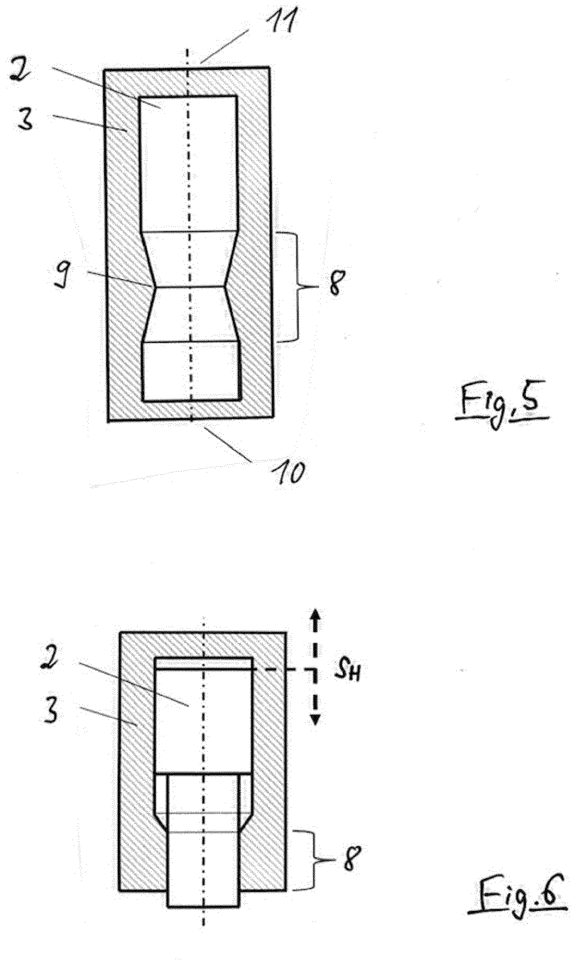

Bei der in Fig. 5 illustrierten dritten Ausführungsform eines Schlagwerkskörpers umschließt das Mantelelement 3 das Kernelelement 2 allseitig. Hierdurch werden die beiden Stirnflächen 10 und 11 vom Mantelelement 3 gebildet.

Nach Fig. 6 ist bei der vierten Ausführungsform eines Schlagwerkskörpers das Mantelelement 3 ebenfalls zylindrisch topfförmig ausgebildet. Das Kernelelement 2 ist hiervon derart umschlossen, dass dieses eine Kolben-Zylinder-Anordnung bildet und axial bewegbar relativ zum Mantelelement 3 ausgeführt ist. Die axiale Fügezone 8 wird hierbei im Wesentlichen vom Kolbendeckelabschnitt des Mantelelements 3 gebildet, der axial bewegbar von einem Kolbenstangenabschnitt des Kernelements 2 durchdrungen wird. Es ergibt sich eine axial beidseitige Verstellbarkeit in Richtung des Weges s_{H} zur Minimierung eines Nachschlageffekts.

Die Erfindung ist nicht beschränkt auf die vorstehend beschriebenen Ausführungsbeispiele. Es sind vielmehr auch Abwandlungen hiervon denkbar, welche vom Schutzbereich der nachfolgenden Ansprüche mit umfasst sind. So ist es beispielsweise auch möglich, dass der hybride Schlagwerkskörper aus mehr als drei Bestandteilen zusammengesetzt ist. Ferner sei darauf hingewiesen, dass das umformtechnische Fügen von Mantelelement 3 auf Kernelement 2 im Querschnitt anhand von Fließlinien am Bauteil nachweisbar ist. Das Umformen kann als eine Kombination von standardisierten Massivumformverfahren gemäß DIN 8583 realisiert werden.

### Bezugszeichenliste

- 1: Schlagwerkskörper
- 2: Kernelement
- 2': Kernelement-Rohling
- 3: Mantelelement
- 3': Mantelelement-Rohling
- 4: Schlagwerkszylinder
- 5: Werkzeug
- 6: Erregerkolben
- 7: Kurbeltrieb
- 8: Fügezone
- 9: Hinterschnittkontur
- 10: erste Stirnfläche
- 11: zweite Stirnfläche

- s_{H}: Hubweg

## Patentansprüche

1. Verfahren zur Herstellung eines hybriden Schlagwerkskörpers (1) für ein Schlagwerk eines Elektrohandwerkzeugs, welcher aus zumindest einem Kernelement (2) sowie einem diesen zumindest teilweise umgebenden Mantelelement (3) zusammengesetzt wird,
**gekennzeichnet durch** die folgenden Fertigungsschritte:
- Bereitstellen eines in einen Mantelelement-Rohling (3`) eingelegten Kernelement-Rohlings (2`), wobei zumindest eines der beiden Bauteile aus einem Stahlmaterial besteht;
- Massivumformen des Mantelelement-Rohlings (3`) mit dem Kernelement-Rohling (2`) mittels eines zumindest einstufigen Verbundfließpressens, derart, dass das Kernelement (2) formschlüssig unverlierbar mit dem umgebenen Mantelelement (3) verbunden wird.

2. Verfahren nach Anspruch 1,
**dadurch gekennzeichnet, dass** die formschlüssig unverlierbare Verbindung zwischen Kernelement (2) und Mantelelement (3) dadurch hergestellt wird, dass am Kernelement (2) innerhalb einer axialen Fügezone (8) eine Hinterschnittkontur (9) erzeugt wird, welche zumindest teilweise von Material des Mantelelements (3) ausgefüllt wird.

3. Verfahren nach Anspruch 1 oder 2,
**dadurch gekennzeichnet, dass** am Kernelement (2) und/oder dem hiermit korrespondierend am Mantelelement (3) innerhalb einer axialen Fügezone (8) eine lokal erhöhte Oberflächenrauheit erzeugt wird, welche höher ist als die Oberflächenrauheit an übrigen Oberflächenbereichen der zu fügenden Bauteile.

4. Verfahren nach einem der vorstehenden Ansprüche,
**dadurch gekennzeichnet, dass** sowohl das Kernelement (2) als auch das Mantelelement (3) aus einem jeweils anderen Stahlmaterial hergestellt werden, wobei das vorzugsweise aus einem Hartmetallmaterial bestehende Kernelement (2) eine höhere Materialdichte aufweist als das Mantelelement (3).

5. Verfahren nach einem der vorstehenden Ansprüche,
**dadurch gekennzeichnet, dass** der Mantelelement-Rohling (3`) aus einem vorzugsweise einem Kohlenstoffstahl bestehenden Metallmaterial hergestellt wird, das umformtechnisch topf- oder zylinderförmig vorgeformt wird.

6. Hybrider Schlagwerkskörper, hergestellt nach einem Verfahren nach einem der vorstehenden Ansprüche,
**dadurch gekennzeichnet, dass** das Mantelelement (3) zylindrisch hülsenförmig ausgebildet ist, wobei dessen axiale Länge kleiner ist als die axiale Länge des hiervon umschlossenen Kernelements (2), so dass vom Kernelement (2) beidseitige Stirnflächen (10, 11) gebildet sind.

7. Hybrider Schlagwerkskörper, hergestellt nach einem Verfahren nach einem der vorstehenden Ansprüche,
**dadurch gekennzeichnet, dass** das Mantelelement (3) zylindrisch topfförmig ausgebildet ist, wobei das hiervon umschlossene Kernelement (2) hieraus hervorstehend die erste Stirnfläche (10) bildet und die Bodenfläche des Mantelelements (3) die zweite Stirnfläche (11) bildet.

8. Hybrider Schlagwerkskörper, hergestellt nach einem Verfahren nach einem der vorstehenden Ansprüche,
**dadurch gekennzeichnet, dass** das Mantelelement (3) das Kernelement (2) allseitig umschließt, so dass die beidseitigen Stirnflächen (10, 11) vom Mantelelement (3) gebildet sind.

9. Hybrider Schlagwerkskörper, hergestellt nach einem Verfahren nach einem der vorstehenden Ansprüche,
**dadurch gekennzeichnet, dass** das Mantelelement (3) zylindrisch topfförmig ausgebildet ist, wobei das Kernelements (2) hiervon derart umschlossen ist, dass dieses eine Kolben-Zylinder-Anordnung bildend axial bewegbar relativ zum Mantelelement (3) ausgeführt ist, wobei ein hervorstehender Teil des Kernelements (2) die erste Stirnseite (10) bildet und die Bodenfläche des Mantelelements (3) die zweite Stirnfläche (11) bildet.

10. Hybrider Schlagwerkskörper nach einem der Ansprüche 6 bis 9,
**dadurch gekennzeichnet, dass** eine Verdrehsicherung vorgesehen ist, welche eine Verdrehmöglichkeit des Kernelements (2) gegenüber dem Mantelelement (3) zumindest einschränkt und insbesondere unterbindet.

11. Pneumatisches Schlagwerk für ein Elektrohandwerkzeug, umfassend einen Schlagwerkzylinder (4) mit einem von einem Kurbeltrieb (7) angetriebenen Erregerkolben (6) sowie einen axial gegenüberliegenden Schlagwerkskolben (1) nach einem der vorstehenden Ansprüche zur axialen Stoßbeaufschlagung eines Werkzeugs (5).

12. Elektrohandwerkzeug, insbesondere Bohr- oder Schlaghammer, mit einem pneumatischen Schlagwerk nach Anspruch 10.
